(19) Europäisches Patentamt
European Patent Office
Office européen des brevets

(11) **EP 1 259 022 B1**

(12) **FASCICULE DE BREVET EUROPEEN**

(45) Date de publication et mention
de la délivrance du brevet:
**03.03.2004 Bulletin 2004/10**

(51) Int Cl.⁷: **H04L 7/00**

(21) Numéro de dépôt: **02291186.1**

(22) Date de dépôt: **13.05.2002**

(54) **Dispositif optique de récupération d'horloge d'un signal optique**

Optische Vorrichtung für die Taktrückgewinnung eines optischen Signals

Optical device for the clock recovery of an optical signal

(84) Etats contractants désignés:
**AT BE CH CY DE DK ES FI FR GB GR IE IT LI LU MC NL PT SE TR**

(30) Priorité: **17.05.2001 FR 0106519**

(43) Date de publication de la demande:
**20.11.2002 Bulletin 2002/47**

(73) Titulaire: **ALCATEL**
**75008 Paris (FR)**

(72) Inventeurs:
• **Chiaroni, Dominique**
**92160 Antony (FR)**
• **Lavigne, Bruno**
**92160 Antony (FR)**
• **Devaux, Fabrice**
**92120 Montrouge (FR)**
• **Sartorius, Bernd**
**14052 Berlin (DE)**
• **Bornholdt, Carsten**
**14089 Berlin (DE)**
• **Bauer, Stephan**
**10589 Berlin (DE)**

(74) Mandataire: **Fournier, Michel Robert Marie et al**
**Compagnie Financière Alcatel**
**Département de Propriété Industrielle,**
**5, rue Noel Pons**
**92734 Nanterre Cedex (FR)**

(56) Documents cités:
• **SARTORIUS B ET AL: "All-optical clock recovery module based on self-pulsating DFB laser" , ELECTRONICS LETTERS, IEE STEVENAGE, GB, VOL. 34, NR. 17, PAGE(S) 1664-1665 XP006010192 ISSN: 0013-5194 * colonne 2, ligne 1 - ligne 17 * * figure 1 ***
• **GUIFANG LI ET AL: "Nonlinear dynamics for all-optical 3R regeneration" LEOS 2000. 2000 IEEE ANNUAL MEETING CONFERENCE PROCEEDINGS. 13TH ANNUAL MEETING. IEEE LASERS AND ELECTRO-OPTICS SOCIETY 2000 ANNUAL MEETING (CAT. NO.00CH37080), LEOS 2000. 2000 IEEE ANNUAL MEETING CONFERENCE PROCEEDINGS, RIO GRANDE, PUERTO RICO, 13-1, pages 521-522 vol.2, XP002192325 2000, Piscataway, NJ, USA, IEEE, USA ISBN: 0-7803-5947-X**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention se situe dans le domaine des télécommunications optiques et plus particulièrement celui des systèmes de transmission où des signaux optiques binaires sont véhiculés sous la forme d'une modulation d'amplitude d'une onde porteuse, cette modulation étant synchronisée par un rythme d'horloge et ces signaux étant organisés en paquets d'informations binaires.

L'invention se rapporte au problème de récupération d'horloge visant à produire à partir d'un signal optique binaire reçu après une transmission, un signal d'horloge constitué d'un train d'impulsions présentant une fréquence de récurrence stable et égale à celle du rythme bit de l'horloge du signal reçu.

La récupération d'horloge est notamment utile dans les dispositifs de régénération qui ont pour fonction de remettre en forme et de resynchroniser la modulation de signaux optiques reçus et qui présentent un phénomène de gigue après transmission dans un réseau.

Les dispositifs de récupération d'horloge connus ont d'abord utilisé des circuits électroniques traitant le signal optique après conversion en grandeur électrique. Plus récemment sont apparus des dispositifs tout optiques permettant à partir d'un signal optique au format de modulation RZ de fournir un signal d'horloge également optique, sans passer par l'intermédiaire du domaine électrique.

Comme dispositifs de récupération d'horloge tout optiques, on peut citer les lasers à verrouillage de mode (en anglais "mode-locked lasers") et les lasers auto-pulsants (en anglais "self-pulsating lasers"). Un exemple de réalisation de laser auto-pulsant utilisable comme dispositif de récupération d'horloge a été décrit à la Conférence OFC'2000, Baltimore, 5-10 mars 2000, lors de la présentation par S. Bauer et al, intitulée "Ultrafast Locking Optical Clock for IP Packet Switching Applications", document TuF5, 7 mars 2000.

De façon connue en soi, ces dispositifs de récupération d'horloge tout optiques comportent un milieu amplificateur optique semi-conducteur inséré dans une cavité résonante et dans ce milieu est injecté un courant électrique dont l'intensité est légèrement supérieure au courant de seuil. Ainsi, une oscillation laser peut s'établir, mais elle entraîne ensuite dans le milieu une variation d'indice et une diminution de la densité de porteurs qui a pour effet d'interrompre l'oscillation laser tant qu'une densité de porteurs supérieure au seuil n'est pas établie à nouveau.

En l'absence d'un signal optique injecté dans le milieu amplificateur, le dispositif est en régime d'oscillation libre. Il émet des impulsions portées par une ou plusieurs longueur(s) d'onde propre(s), ces impulsions présentant une ou plusieurs fréquence(s) de récurrence propre(s) fonction du dimensionnement du composant et de l'intensité du courant injecté. Si dans le milieu amplificateur est injectée une onde optique modulée en amplitude au rythme d'une horloge ayant une fréquence voisine d'une des fréquences de récurrence propres, le dispositif émettra des impulsions au rythme de cette horloge.

Le fonctionnement de ces dispositifs de récupération d'horloge présente deux caractéristiques qui sont le temps d'accrochage et le temps de maintien. Le temps d'accrochage Ta est la durée pendant laquelle le signal optique doit être injecté pour que la fréquence de récurrence des impulsions soit stabilisée sur la fréquence d'horloge du signal. Le temps de maintien Tm est la durée pendant laquelle cette fréquence de récurrence reste stable après la disparition du signal.

Ces temps d'accrochage et de maintien dépendent d'abord des séquences binaires présentes respectivement au début et à la fin du signal. Le temps d'accrochage est d'autant plus court que le début du signal comporte des impulsions (représentatives de "1" binaires en modulation RZ) présentant un taux de répétition élevé. Le temps de maintien est d'autant plus long que ce taux de répétition d'impulsions est élevé à la fin du signal.

Les temps d'accrochage et de maintien dépendent aussi de la puissance du signal injecté : si la puissance augmente, les temps d'accrochage et de maintien diminuent.

Ces propriétés doivent être prises en compte particulièrement dans les cas de récupération d'horloge mise en oeuvre dans les réseaux de transmission à commutation de paquets optiques asynchrones. En effet, dans ces réseaux, les paquets formés en divers points d'émission sont reçus dans des noeuds de commutation où ils sont aiguillés vers des liaisons de transmission correspondant à leurs destinations respectives. Ainsi, dans les liaisons, l'information est sous la forme d'une succession de paquets d'origines diverses dont les rythmes d'horloge ont des phases indépendantes et des fréquences pouvant présenter des différences sensibles. Il faut donc que la récupération d'horloge s'effectue au rythme des paquets reçus, ce qui implique des contraintes sur les temps d'accrochage et de maintien des dispositifs de récupération d'horloge.

Pour définir précisément ces contraintes, on prend d'abord en compte le fait que les noeuds de commutation délivrent aux dispositifs de régénération des paquets constitués d'une bande de garde non modulée suivie d'une séquence modulée appelées "charge utile" (en anglais "pay load"). La charge utile débute par un préambule, se poursuit par une séquence d'informations et se termine par un motif de fin. La bande de garde assure une puissance optique basse pendant une durée de transmission minimale déterminée appelée "temps de garde" Tg et vise à assurer un délai minimum préétabli entre l'envoi sur une même liaison de deux charges utiles successives. Par ailleurs, pour faciliter la récupération d'horloge, le préambule et le motif de fin sont constitués de séquences prédéfinies de "1" successifs qui, au format RZ, correspondent à des successions d'impulsions au rythme de l'horloge bit du signal.

Le dispositif de récupération doit alors être en mesure de fournir un signal d'horloge stable au rythme des paquets reçus et pendant une durée au moins égale à la durée de transmission Tu d'une charge utile. Pour cela, une première condition est que le temps d'accrochage Ta soit inférieur à Tu, quelle que soit la séquence d'informations. En pratique, cela impose que Ta soit inférieur à la durée de transmission Te du préambule.

Une autre condition est que le temps de maintien Tm soit au moins égal au temps d'accrochage Ta. Toutefois, compte tenu de l'existence du motif de fin, cette condition est en pratique toujours satisfaite par les dispositifs de récupération d'horloge mentionnés précédemment.

Ainsi, les conditions :

(1) Ta ≤ Tu
(2) Ta ≤ Tm .

se réduisent en pratique à la condition :

(3) Ta ≤ Te.

On a vu précédemment qu'en augmentant la puissance optique moyenne du signal injecté on réduisait Ta et Tm. Ainsi, en ajustant cette puissance moyenne à un niveau suffisant, la condition (3) peut être satisfaite, comme cela a d'ailleurs pu être vérifié expérimentalement.

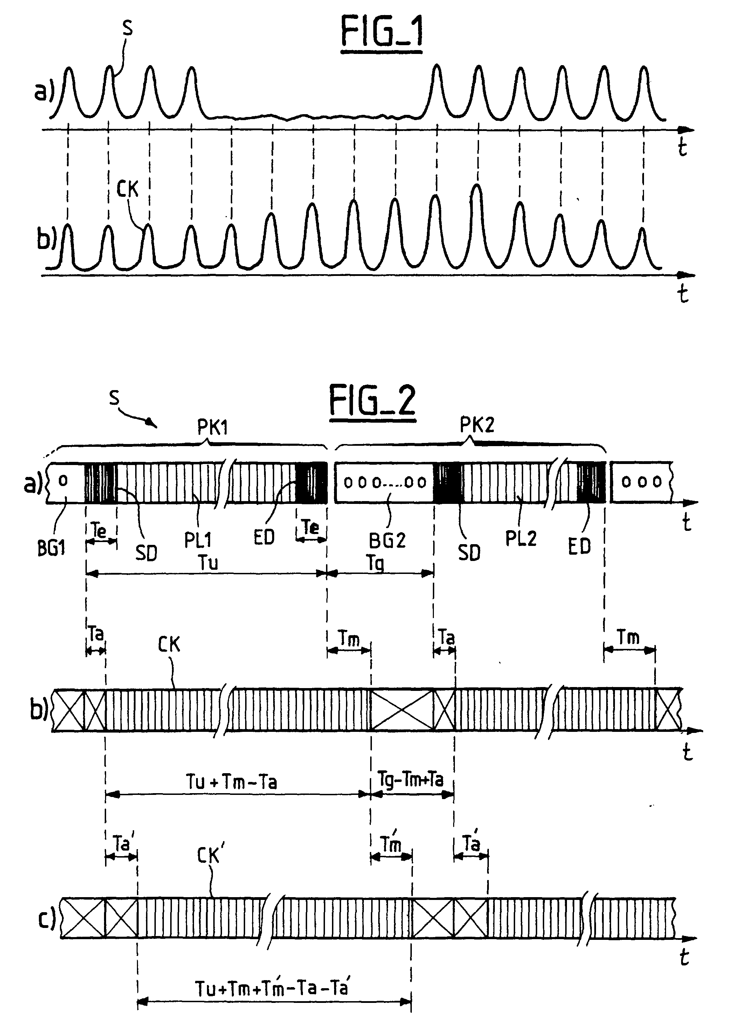

Toutefois, l'injection dans le dispositif d'un signal à un niveau de puissance suffisant soulève un autre problème dû à un phénomène appelé "effet de séquence" (en anglais : "patterning effect"). Cet effet, d'autant plus sensible que la puissance du signal est élevée, se révèle lorsque le signal injecté présente de longues séquences de "1" ou de "0", et se traduit par une modulation de l'amplitude des impulsions d'horloge et par une gigue importante durant les séquences de "0". Ce phénomène est illustré schématiquement par les chronogrammes a) et b) de la figure 1 montrant les variations d'amplitude en fonction du temps respectivement d'un signal injecté S dans un dispositif de type laser auto-pulsant (ou analogue) et d'un signal d'horloge CK en résultant. Le signal S présentant une première séquence constituée de "1" successifs, puis une séquence constituée de "0" successifs, puis une autre séquence constituée de "1" successifs, on voit que les impulsions formant le signal d'horloge CK ont une plus faible amplitude pendant les séquences de "1" et présentent une dérive de fréquence pendant la séquence de "0".

Cette modulation d'amplitude et cette gigue nuisent à l'efficacité des dispositifs de régénération. En effet, le signal d'horloge étant destiné à être modulé en fonction de la modulation du signal à régénérer pour constituer le signal régénéré, il importe que ce signal d'horloge présente une amplitude la plus stable possible. De même, le rythme d'horloge du signal régénéré étant celui du signal d'horloge récupéré, ce dernier ne devrait pas présenter de gigue.

La modulation d'amplitude du signal d'horloge pourrait être supprimée au moyen d'un dispositif tout optique d'égalisation de type connu, mais un tel dispositif est incapable d'éliminer la gigue.

Aussi, l'invention a pour but d'apporter une solution efficace au problème précédent en permettant un temps d'accrochage Ta réduit, pouvant être inférieur à la durée de transmission Te du préambule des charges utiles, tout en réduisant l'effet de séquence mentionné ci-dessus.

Dans ce but, l'invention a pour objet un système de récupération d'horloge à partir d'un signal optique reçu, ledit signal reçu étant sous la forme d'une modulation d'amplitude d'une onde porteuse optique, ladite modulation étant synchrone d'un rythme d'horloge, système caractérisé en ce qu'il comporte un premier dispositif de récupération d'horloge optique prévu pour fournir un premier signal d'horloge optique en réponse audit signal optique reçu, et un second dispositif de récupération d'horloge optique prévu pour fournir un second signal d'horloge optique en réponse audit premier signal d'horloge optique.

Ainsi, contrairement au signal reçu, le premier signal d'horloge ne risque pas de comporter pas de longues périodes sans impulsions. Il en résulte que le second dispositif de récupération d'horloge fournira un second signal d'horloge présentant une stabilité accrue aussi bien en amplitude qu'en fréquence.

Par ailleurs, on sait que le signal d'horloge fourni par un dispositif de récupération présente une stabilité accrue si la puissance du signal injecté est modérée.

Aussi, pour tenir compte de cette autre propriété des dispositifs de récupération d'horloge, le système de récupération d'horloge selon l'invention est en outre caractérisé en ce que le premier dispositif de récupération d'horloge est prévu pour fournir le premier signal d'horloge avec une puissance optique inférieure à la puissance optique du signal optique reçu.

Selon un mode de réalisation conforme à l'invention, lesdits premier et second dispositifs de récupération d'horloge comportent des premier et second lasers auto-pulsants délivrant respectivement lesdits premier et second signaux d'horloge, ces signaux d'horloge étant portés par des longueurs d'onde différentes.

Avantageusement, ces premier et second lasers auto-pulsants sont des composants identiques dans lesquels sont injectés respectivement des premier et second courants électriques, l'intensité du premier courant étant supérieure à celle du second courant.

Cette dernière disposition tient compte du fait que pour présenter un fonctionnement optimum, un laser auto-pulsant utilisé en dispositif de récupération d'horloge doit être alimenté par un courant électrique adapté au signal optique injecté. Et plus précisément, il a été trouvé que l'intensité du courant électrique doit être d'autant plus élevée que la puissance optique du signal est élevée.

D'autres aspects et avantages de l'invention apparaîtront dans la suite de la description en référence aux figures.

- La figure 1 représente deux chronogrammes a) et b), déjà commentés précédemment, montrant respectivement un signal d'entrée appliqué à un dispositif de récupération d'horloge usuel et le signal d'horloge en résultant.
- La figure 2 représente trois chronogrammes a), b) et c) montrant respectivement un signal d'entrée constitué de paquets successifs et deux signaux d'horloge formés par le système de récupération d'horloge selon l'invention.
- La figure 3 représente un exemple de réalisation du système de récupération d'horloge selon l'invention.

Les chronogrammes de la figure 2 représentent les principaux signaux impliqués dans le système de récupération d'horloge selon l'invention.

Comme représenté sur le chronogramme a), le signal reçu S est constitué de paquets successifs PK1, PK2 formés chacun d'une bande de garde BG1, BG2 suivie d'une charge utiles PL1, PL2 contenant les données d'information du paquet. La bande de garde a une durée de transmission Tg, appelée "temps de garde", pendant laquelle la puissance optique est basse. L'existence de ce temps de garde assure un délai minimum préétabli entre la réception de deux charges utiles successives. La charge utile de chaque paquet correspond à une durée de transmission Tu fonction du nombre de bits de la charge utile et du débit.

La charge utile comporte à son début un préambule SD, puis un champs d'informations et enfin un motif de fin ED. Le préambule et le motif de fin sont constitués de séquences prédéfinies de "1" successifs correspondant à une durée de transmission Te.

Le chronogramme b) de la figure 2 montre un premier signal d'horloge CK délivré par un premier dispositif de récupération d'horloge recevant le signal S. Ce dispositif assure un temps d'accrochage Ta séparant la fin de chaque bande de garde, par exemple BG1, et le moment où les impulsions du signal CK ont pris le rythme de l'horloge du signal S.

Dans ce contexte, le premier dispositif fournira dans tous les cas un signal CK au rythme des paquets reçus si Ta $\leq$ Te. Cette condition pourra être satisfaite par un ajustement à un niveau suffisant de la puissance optique du signal reçu S.

Après la fin de la charge utile PL1, les impulsions du signal CK restent stables pendant une durée limitée qui définit un temps de maintien Tm. Ainsi, le signal CK fournit pour chaque paquet des impulsions utiles pendant l'intervalle de temps Tu+Tm-Ta.

Comme déjà signalé précédemment, compte tenu de l'existence d'un préambule et d'un motif de fin suffisamment longs en pratique, les dispositifs de récupération d'horloge usuels présentent toujours un temps de maintien supérieur à leur temps d'accrochage. Par conséquent, l'intervalle de temps Tu+Tm-Ta sera toujours supérieur à Tu.

Le premier signal d'horloge CK est injecté dans un second dispositif de récupération d'horloge qui fournit un second signal d'horloge CK' représenté sur le chronogramme c) de la figure 2. Comme précédemment, le second dispositif assure un temps d'accrochage T'a séparant le début de la réception du signal d'horloge CK dans son état stable et le moment où les impulsions du signal CK' ont pris le rythme de l'horloge CK. Aussi, pour que le second dispositif soit en mesure de fournir un signal CK' stable au rythme des paquets reçus, il suffit que la condition (4) T'a $\leq$ Tu+Tm-Ta soit respectée. Comme Tu+Tm-Ta > Tu, on remarque que la contrainte sur le temps d'accrochage du second dispositif de récupération d'horloge est fortement relâchée par rapport à celle du premier dispositif de récupération d'horloge.

Après la disparition de l'horloge CK dans son état stable, les impulsions du signal CK' restent stables pendant un temps de maintien T'm. Ainsi, le signal CK' comporte pour chaque paquet des impulsions utiles pendant l'intervalle de temps Tu+Tm+T'm-T'a-Ta. Par conséquent, pour que le système soit en mesure de fournir un signal d'horloge CK' stable pendant une durée au moins égale à la durée de transmission Tu de chaque charge utile, il convient donc de respecter la condition Tu+Tm+T'm-Ta-T'a $\geq$ Tu, c'est-à-dire :

$$(5) \quad Tm+T'm \geq T'a+Ta$$

Comme les temps de maintien Tm et T'm sont supérieurs aux temps d'accrochage, respectivement Ta et T'a, cette condition (5) sera en pratique toujours satisfaite.

La réalisation pratique du système de récupération d'horloge selon l'invention consiste essentiellement à coupler en cascade un premier dispositif de récupération d'horloge optique à un second dispositif de récupération d'horloge optique.

Ainsi, selon le contexte d'utilisation (puissance optique du signal reçu S et selon le dispositif de récupération d'horloge choisi (puissance optique du signal d'horloge qu'il délivre), on prévoira en cas de besoin des moyens d'ajustement par amplification ou par atténuation des puissances optiques du signal reçu S et du premier signal d'horloge CK.

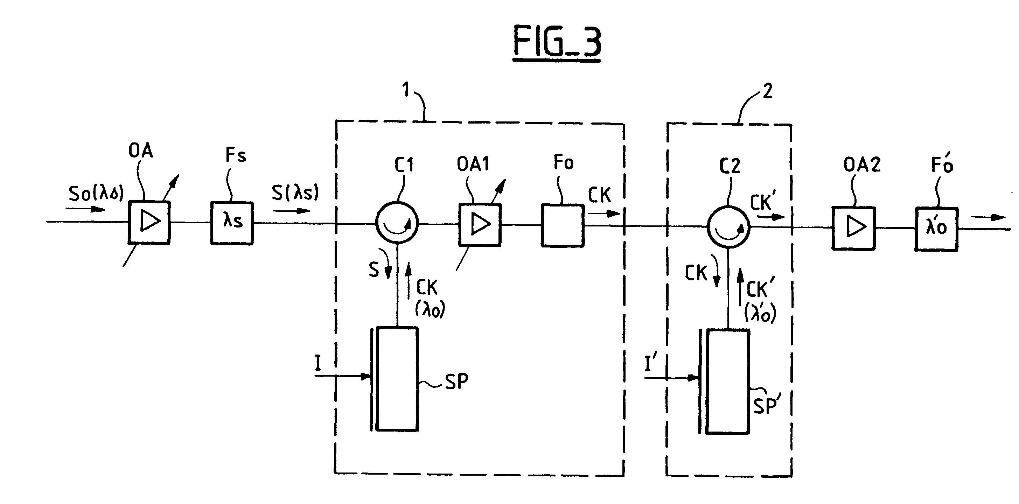

A titre d'exemple, la figure 3 représente un mode de réalisation possible du système de récupération d'horloge selon l'invention. Ce système comporte les premier et second dispositifs de récupération d'horloge 1,2 couplés en cascade.

Selon cet exemple, on a supposé que signal reçu S est dérivé d'un signal d'entrée S0 dont la puissance optique est insuffisante. Dans ce cas, le système comporte un premier étage constitué d'un amplificateur optique OA suivi d'un filtre passe-bande Fs calé sur la longueur d'onde λs du signal d'entrée S0 de façon à éliminer le bruit d'amplification produit par l'amplificateur OA. Le signal présent en sortie du filtre Fs constitue alors le signal reçu S contenant le rythme d'horloge à récupérer.

Le premier dispositif 1 de récupération d'horloge comprend un circulateur C1 à trois ports. Un premier port reçoit le signal S, un second port est couplé à un laser auto-pulsant SP et un troisième port fournit le premier signal d'horloge CK délivré par le laser SP. Ce laser auto-pulsant SP est un composant semi-conducteur, par exemple conforme à la réalisation décrite dans la publication précitée. Ce composant comporte plusieurs sections dont une section de gain alimentée par un courant électrique I approprié de sorte qu'il délivre des impulsions optiques portées par une longueur d'onde λ0 donnée et présentant une fréquence de récurrence imposée par le rythme d'horloge du signal S. Ces impulsions constituent donc le premier signal d'horloge CK.

Le gain de l'amplificateur OA est choisi ou ajusté pour que le temps d'accrochage Ta du laser auto-pulsant SP ne dépasse pas la durée exigée par le contexte d'utilisation.

Le second dispositif 2 est simplement constitué d'un circulateur C2 à trois ports et d'un second laser auto-pulsant SP'. Un premier port du circulateur C2 reçoit le premier signal d'horloge CK, un second port est couplé au second laser auto-pulsant SP' et un troisième port constitue la sortie du dispositif 2. Le second laser auto-pulsant SP' est prévu pour délivrer des impulsions optiques portées par une longueur d'onde λ'0 donnée, différente de λ0, et présentant une fréquence de récurrence imposée par le rythme d'horloge du signal S. Ces impulsions constituent le second signal d'horloge CK' disponible sur le troisième port du circulateur C2.

Pour réduire l'effet de séquence présent dans le signal CK en sortie du premier laser auto-pulsant SP, il convient que le premier dispositif 1 de récupération d'horloge fournisse au second dispositif 2 un signal d'horloge dont la puissance optique est inférieure à celle du signal optique reçu S. Pour cela, on pourra prévoir en sortie du premier laser auto-pulsant SP des moyens pour ajuster la puissance optique du signal fourni au second dispositif 2. Selon les types de lasers utilisés, cet ajustement pourra être une atténuation ou une amplification.

Ainsi comme représenté, si la puissance optique du signal d'horloge CK fournie par le laser auto-pulsant SP est insuffisante, le troisième port du circulateur C1 sera couplé à un amplificateur optique OA1, par exemple à gain ajustable, suivi d'un filtre passe-bande F0. Le filtre passe-bande F0 est prévu pour éliminer le bruit d'amplification produit par l'amplificateur OA1, tout en transmettant la longueur d'onde λ0 du premier signal d'horloge CK.

Il conviendra en outre d'assurer que la polarisation du premier signal d'horloge CK soit compatible avec le second laser auto-pulsant SP'. Pour cela, le couplage entre les deux dispositif 1 et 2 pourra être réalisé par l'intermédiaire d'une fibre à maintien de polarisation convenablement orientée.

En cas de besoin, le troisième port peut être couplé à un amplificateur optique OA2 suivi d'un filtre passe-bande F'0 prévu pour éliminer le bruit d'amplification produit par l'amplificateur OA2, tout en transmettant la longueur d'onde λ'0 du second signal d'horloge CK'.

Du point de vue de la réalisation pratique, on peut adopter une ou plusieurs des options exposées ci-dessous.

- Les premier et second lasers auto-pulsants SP, SP' sont des composants identiques dans lesquels sont injectés respectivement des premier et second courants électriques I et I'. Pour tenir compte du fait que la puissance optique du signal S reçu par le premier laser auto-pulsants SP est supérieure à celle du signal CK reçu par le second laser auto-pulsants SP', l'intensité du premier courant I sera supérieure à celle du second courant I'.

- La longueur d'onde λ'0 du second signal d'horloge CK' est identique à la longueur d'onde λs du signal reçu S. Cette disposition présente un intérêt particulier dans un régénérateur, lorsque le signal CK' fournit l'onde porteuse d'un signal régénéré. Le régénérateur est alors transparent du point de vue longueur d'onde.

- Les amplificateurs optiques OA et OA1 sont à gain ajustable.

Enfin, nous allons donner quelques valeurs expérimentales pouvant être obtenues au moyen de cette réalisation.

La charge utile et la bande de garde contenant respectivement 10 kbit et 256 bits, à un débit de 10 Gbit/s, on aura Tu = 974,4 ns et Tg = 25,6 ns.

Avec une puissance optique du signal S de 2 dBm, les temps d'accrochage et de maintien du premier dispositif de récupération 1 valent respectivement Ta = 2ns et Tm = 4ns.

Les mêmes valeurs de temps d'accrochage et de maintien pour le second dispositif de récupération 2 peuvent être obtenues avec une puissance optique de -2 dBm pour le signal d'horloge CK appliqué au second laser auto-pulsant SP'.

On peut ainsi vérifier que toutes les conditions exposées précédemment sont facilement satisfaites.

## Revendications

1. Système de récupération d'horloge à partir d'un signal optique reçu (S), ledit signal reçu étant sous la forme d'une modulation d'amplitude d'une onde porteuse optique, ladite modulation étant synchrone d'un rythme d'horloge, système **caractérisé en ce qu'**il comporte un premier dispositif (1) de récupération d'horloge optique prévu pour fournir un premier signal d'horloge optique (CK) en réponse audit signal optique reçu (S), et un second dispositif (2) de récupération d'horloge optique prévu pour fournir un second signal d'horloge optique (CK') en réponse audit premier signal d'horloge optique (CK).

2. Système de récupération d'horloge selon la revendication 1, **caractérisé en ce que** le premier dispositif (1) de récupération d'horloge est prévu pour fournir le premier signal d'horloge (CK) avec une puissance optique inférieure à la puissance optique du signal optique reçu (S).

3. Système de récupération d'horloge selon la revendication 2, **caractérisé en ce que** lesdits premier et second dispositifs de récupération d'horloge (1, 2) comportent des premier et second lasers auto-pulsants (SP, SP') délivrant respectivement lesdits premier et second signaux d'horloge (CK, CK'), ces signaux d'horloge étant portés par des longueurs d'onde différentes ($\lambda 0$, $\lambda'0$).

4. Système de récupération d'horloge selon la revendication 3, **caractérisé en ce que** lesdits premier et second lasers auto-pulsants (SP, SP') sont des composants identiques dans lesquels sont injectés respectivement des premier et second courants électriques (I, I'), l'intensité du premier courant (I) étant supérieure à celle du second courant (I').

5. Système de récupération d'horloge selon l'une des revendications 1 à 4, **caractérisé en ce que** ledit second dispositif de récupération d'horloge (2) est prévu pour fournir un second signal d'horloge (CK') porté par une longueur d'onde identique à celle dudit signal optique reçu (S).

6. Système de récupération d'horloge selon l'une des revendications 1 à 5, **caractérisé en ce que** ledit signal reçu (S) étant constitué de paquets successifs (PK1, PK2) comportant chacun une charge utile (PL1, PL2) débutant par un préambule (SD) et se terminant par un motif de fin (ED), ledit préambule et ledit motif de fin étant constitués de séquences prédéfinies de "1" successifs, ledit système comporte des moyens d'ajustement de puissance optique (OA) pour assurer que la puissance optique du signal optique reçu (S) soit suffisante pour que le temps d'accrochage (Ta) du premier dispositif de récupération d'horloge (1) soit inférieur à la durée de transmission (Te) dudit préambule (SD).

## Claims

1. A system for recovering a clock from a received optical signal (S) taking the form of amplitude modulation of an optical carrier wave, said modulation being synchronous with a clock rhythm, which system is **characterized in that** it includes a first optical clock recovery device (1) adapted to supply a first optical clock signal (K) in response to said received optical signal (S) and a second optical clock recovery device (2) adapted to supply a second optical clock signal (CK') in response to said first optical clock signal (CK).

2. A clock recovery system according to claim 1 **characterized in that** the first clock recovery device (1) is adapted to supply the first clock signal (CK) with an optical power less than the optical power of the received optical signal (S).

3. A clock recovery signal according to claim 2 **characterized in that** said first and second clock recovery devices (1, 2) include first and second self-pulsating lasers (SP, SP') respectively supplying said first and second clock signals (CK, CK') with different carrier wavelengths ($\lambda 0$, $\lambda'0$).

4. A clock recovery device according to claim 3 **characterized in that** said first and second self-pulsating lasers (SP, SP') are identical components into which are respectively injected first and second electrical currents (I, I') and the first electrical current (I) is greater than the second electrical current (I').

5. A clock recovery system according to any of claims 1 to 4 **characterized in that** said second clock recovery device (2) is adapted to supply a second clock signal (CK') with a carrier wavelength identical to that of said received optical signal (S).

6. A clock recovery system according to any of claims 1 to 5 **characterized in that** said received signal (S) comprises successive packets (PK1, PK2) each including a payload (PL1, PL2) starting with a preamble (SD) and ending with an end pattern (ED), said preamble and said end pattern comprise predefined sequences of successive "1" bits, and said system includes optical power adjustment means (OA) for ensuring that the optical power of the received optical signal (S) is sufficient for the acquisition time (Ta) of the first clock recovery device (1) to be less than the transmission time (Te) of said preamble (SD).

**Patentansprüche**

1.  System zur Taktrückgewinnung aus einem empfangenen optischen Signal (S), welches in Form einer Amplitudenmodulation einer optischen Trägerwelle vorliegt, wobei besagte Modulation zu einem Taktrhythmus synchron ist und das System **dadurch gekennzeichnet ist, daß** es eine erste Vorrichtung (1) zur optischen Taktrückgewinnung beinhaltet, die dafür vorgesehen ist, ein erstes optisches Taktsignal (CK) als Reaktion auf das besagte empfangene optische Signal (S) zu liefern, sowie eine zweite Vorrichtung (2) zur optischen Taktrückgewinnung, die dafür vorgesehen ist, ein zweites optisches Taktsignal (CK') als Reaktion auf das besagte erste optische Signal (CK) zu liefern.

2.  System zur Taktrückgewinnung gemäß Anspruch 1, **dadurch gekennzeichnet, daß** die erste Vorrichtung (1) zur Taktrückgewinnung dafür vorgesehen ist, das erste Taktsignal (CK) mit einer optischen Leistung zu liefern, die kleiner als die optische Leistung des empfangenen Signals (S) ist.

3.  System zur Taktrückgewinnung gemäß Anspruch 2, **dadurch gekennzeichnet, daß** die besagte erste und zweite Vorrichtung (1, 2) zur Taktrückgewinnung einen ersten und zweiten selbstpulsierenden Laser (SP, SP') beinhalten, die jeweils das besagte erste und zweite Taktsignal (CK, CK') liefern, wobei diese Taktsignale auf unterschiedlichen Wellenlängen ($\lambda 0$, $\lambda' 0$) transportiert werden.

4.  System zur Taktrückgewinnung gemäß Anspruch 3, **dadurch gekennzeichnet, daß** die besagten ersten und zweiten selbstpulsierenden Laser (SP, SP') identische Bauelemente sind, in welche jeweils ein erster beziehungsweise zweiter elektrischer Strom (I, I') injiziert wird, wobei die Stärke des ersten Stromes (I) größer als die des zweiten Stromes (I') ist.

5.  System zur Taktrückgewinnung gemäß einem oder mehreren der Ansprüche 1 bis 4, **dadurch gekennzeichnet, daß** die besagte zweite Vorrichtung (2) zur Taktrückgewinnung dafür vorgesehen ist, ein zweites Taktsignal (CK') zu liefern, das auf einer Wellenlänge transportiert wird, die identisch mit derjenigen des besagten empfangenen optischen Signals (S) ist.

6.  System zur Taktrückgewinnung gemäß einem oder mehreren der Ansprüche 1 bis 5, **dadurch gekennzeichnet, daß** das besagte empfangene Signal (S), das aus aufeinanderfolgenden Paketen (PK1, PK2) besteht, von denen jedes eine Nutzlast (PL1, PL2) beinhaltet, welche mit einer Präambel (SD) beginnt und mit einem Abschlußmuster (ED) endet, wobei die besagte Präambel und das besagte Abschlußmuster aus vordefinierten Sequenzen von aufeinanderfolgenden "1" bestehen, wobei das besagte System Mittel zum Einstellen der optischen Leistung (OA) beinhaltet, um zu gewährleisten, daß die optische Leistung des empfangenen optischen Signals (S) ausreichend hoch ist, damit die Fangzeit (Ta) der ersten Vorrichtung (1) zur Taktrückgewinnung unter derjenigen der Übertragungsdauer (Te) der besagten Präambel (SD) liegt.

# FIG_1

# FIG_2

# FIG_3